# EUROPEAN PATENT APPLICATION

(11) **EP 3 868 212 A1**
(43) Date of publication of application: **25.08.2021**
(21) Application number: 19873936.9
(22) Date of filing: 18.10.2019
(51) Int. Cl.: A23F 3/16, A23L 2/00, A23L 2/38

(54) **PACKAGED BEVERAGE**

(30) Priority: 19.10.2018 JP 2018197893
(71) Applicant: Suntory Holdings Limited, Osaka 530-8203 (JP)
(72) Inventor: NAKATA, Aki, Kawasaki-shi, Kanagawa 211-0067 (JP); MATSUBAYASHI, Hideki, Kawasaki-shi, Kanagawa 211-0067 (JP)
(74) Representative: Vossius & Partner Patentanwälte Rechtsanwälte mbB
(86) International application number: PCT/JP2019/041014
(87) International publication number: WO 2020/080506

(57) **Abstract**

An object of the present invention resides in providing a packaged beverage characterized in that the harsh taste coming from an olive extract is suppressed.

The packaged beverage is prepared through adjusting a beverage by the following procedure: (i) adjusting a hydroxytyrosol content to be in the range of from 0.8 to 6 mg/100 mL, (ii) adding a tea extract to give a non-polymeric catechins content of from 1 to 100 mg/100 mL, and (iii) adding ascorbic acid to give an ascorbic acid content of from 5 to 80 mg/100 mL.

## Description

### TECHNICAL FIELD

The present inventions relates to a packaged beverage, and more particularly to a packaged beverage that is storable at ordinary temperatures for a long period of time and which is characterized in that the harsh taste coming from an olive extract is suppressed.

### BACKGROUND ART

There have been a wide variety of beverages launched in the market due to diversified consumer preferences and increased health consciousness. In this context, attention has in recent years been paid to extracts from olive fruits or leaves from the viewpoint that these extracts are rich in polyphenols which are believed to have blood glucose and pressure-lowering activities and antioxidant activity. However, polyphenolrich extracts from olives have a peculiar strong smell and bitter taste, which often pose an obstacle to continuously consuming them in the form of beverages for a long period of time.

In order to address such problems, studies have long been conducted on the smell and taste of olive extracts. It has been reported that the astringent and bitter taste of an olive leaf extract can be masked by adding one or two or more selected from a peptide, sodium bicarbonate, and an amino acid to the olive leaf extract (PTL 1). Also, there have been reports of beverages whose taste and aroma are improved by combining olive leaves with different tea leaves or other medicinal plants. Examples of such beverages are as follows: a beverage characterized in that the characteristic aroma of olive leaves is emphasized and the ease of drinking is realized by using a mixture of olive leaves with green tea and/or roasted green tea (PTL 2); a beverage characterized in that the flat and bland taste of olive leaves is improved by mixing olive leaves with the stems, leaves and fruits of *Chamaecrista nomame* and *Senna occidentalis* (PTL 3); and a tea beverage characterized in that the bitterness and astringency of olive tea are masked and the ease of drinking is realized by mixing olive leaves with hydrangea tea (PTL 4).

### CITATION LIST

### PATENT LITERATURES

PTL 1: Japanese Unexamined Patent Application Publication No. JP 2011-125301
PTL 2: Japanese Unexamined Patent Application Publication No. JP 2001-69917
PTL 3: Japanese Unexamined Patent Application Publication No. JP H03-180161
PTL 4: Japanese Unexamined Patent Application Publication No. JP 2004-24002

### SUMMARY OF INVENTION

### TECHNICAL PROBLEM

In olive extract-containing beverages, the subtly bitter taste and characteristic aroma of an olive extract have a potential to enhance beverage palatability and can serve as a kind of hidden flavor effective for enhancing beverage preference depending on the amount added of the olive extract. However, it was found that when olive extract-containing beverages are heat sterilized for the purpose of long-term storage at ambient temperatures, the characteristic bitterness and aroma of an olive extract may be changed into strong distasteful harsh taste, thereby easily causing deterioration of clean sensation and quick aftertaste required for beverages.

Therefore, an object of the present invention resides in providing a packaged beverage characterized in that the harsh taste coming from an olive extract is suppressed.

### SOLUTION TO PROBLEM

The present inventors have made intensive studies in consideration of the aforementioned object and, as a result, surprisingly found that a tea extract and ascorbic acid are effective for suppressing the harsh taste coming from an olive extract. Based on this finding, the inventors have completed the present invention.

The present invention is directed, but not limited, to the following.
(1) A packaged beverage comprising a tea extract, wherein the beverage satisfies the following requirements (i) to (iii):
   (i) a hydroxytyrosol content of from 0.8 to 6 mg/100 mL;
   (ii) a non-polymeric catechins content of from 1 to 100 mg/100 mL; and
   (iii) an ascorbic acid content of from 5 to 80 mg/100 mL.
(2) The beverage as set forth in (1), wherein the beverage contains an olive extract.
(3) The beverage as set forth in (1) or (2), wherein the beverage has a pH of from 4.5 to 7.0.

### ADVANTAGEOUS EFFECTS OF INVENTION

According to the present invention, the harsh taste coming from an olive extract can be suppressed in a packaged beverage containing an olive extract. Thereby, the packaged beverage of this invention becomes easy to drink continuously. Also, by continuously drinking the packaged beverage of this invention, polyphenols such as hydroxytyrosol present in an olive extract can be continuously consumed for a long period of time, and as a result, it is expected that various physiological effects can be adequately obtained.

### DESCRIPTION OF EMBODIMENTS

One aspect of the present invention is directed to a packaged beverage comprising a tea extract, wherein the packaged beverage satisfies the following requirements (i) to (iii):
(i) a hydroxytyrosol content of from 0.8 to 6 mg/100 mL;
(ii) a non-polymeric catechins content of from 1 to 100 mg/100 mL; and
(iii) an ascorbic acid content of from 5 to 80 mg/100 mL.

Hereunder, the beverage of this invention will be described in detail.

### (Olive extract)

The beverage of the present invention can contain an olive extract. As referred to herein, the term "olive extract" refers to a polyphenol-containing extract obtained from olive fruits or leaves used as a source ingredient. The extraction can be conducted by using a known method -- for example, olive extracts can be obtained using hot water extraction, organic solvent extraction, or other extraction techniques. The olive extract preferred in this invention is an extract of olive leaves with an organic solvent. The organic solvent to be preferably used is a mixture of water with a water-soluble organic solvent. Examples of water-soluble organic solvents include alcohols such as ethanol and methanol, ketones such as acetone, and esters such as ethyl acetate. Among them, alcohols and ketones are preferred, with ethanol being particularly preferred.

An olive extract contains calcium, iron, tocopherol (vitamin E), phenolic compounds such as oleuropein or hydroxytyrosol, and the like. The present inventors have confirmed that the harsh taste coming from an olive extract is associated with hydroxytyrosol present in the olive extract *(i.e.,* olive extract-derived hydroxytyrosol) and is correlated with the amount of said hydroxytyrosol. Therefore, a beverage containing hydroxytyrosol at a specified concentration is preferred for properly obtaining the effects of this invention. To be specific, the beverage of this invention contains hydroxytyrosol at a concentration of from 0.8 to 6 mg/100 mL, preferably from 0.8 to 5 mg/100 mL, more preferably from 0.8 to 2 mg/100 mL. A purified hydroxytyrosol product (including a crudely purified hydroxytyrosol product) obtained by isolating and purifying an olive extract may also be used as the olive extract of this invention.

The content of the olive extract in the beverage of the present invention is not particularly limited and can be in the range of, for example, from 1 to 50 mg/100 mL. The content of the olive extract in the beverage of this invention can also be determined based on the aforementioned amount (concentration) of hydroxytyrosol present in the beverage of this invention. In other words, the amount added of the olive extract can be adjusted so as to ensure that the content of hydroxytyrosol falls within the aforementioned range. The content of hydroxytyrosol in the beverage of this invention can be measured using LC/MS/MS as described later in the Examples section.

### (Tea extract)

The first characteristic of the beverage of the present invention is that the harsh taste coming from an olive extract is suppressed by a tea extract. It is well known that water-soluble precursors present in a tea extract are converted by heating to volatile components which cause the development of off-flavors. In view of this fact, it is surprising to find that the harsh taste generated by heating an olive extract can be suppressed by a tea extract. As referred to herein, the term "harsh taste" refers to an odd taste which is felt when swallowing a beverage and which is foreign to the inherent taste of the beverage, and the harsh taste is perceived as an unpleasant taste that deteriorates clean sensation and quick aftertaste.

In the packaged beverage containing an olive extract according to the present invention, addition of a tea extract is important, and moreover, the non-polymeric catechins content is adjusted to be in the range of from 1 to 100 mg per 100 mL of the beverage. In the beverage of this invention, the non-polymeric catechins content is in the range of preferably from 10 to 100 mg/100 mL, more preferably from 20 to 90 mg/100 mL, still more preferably from 30 to 80 mg/100 mL. As referred to herein, the term "non-polymeric catechins" is a generic name for catechin, epicatechin, gallocatechin, epigallocatechin, catechin gallate, epicatechin gallate, gallocatechin gallate and epigallocatechin gallate, and the non-polymeric catechins content refers to a total content of the eight different catechin compounds mentioned above. The non-polymeric catechins content in the beverage can be measured using high-performance liquid chromatography (HPLC) by detecting the respective peaks of these catechin compounds.

As referred to herein, the term "tea extract" is a concept that includes a liquid tea extract, a concentrate thereof, and their purified products. Examples of liquid tea extracts include liquids extracted from tea leaves using water, hot water, hydrous ethanol or the like by a conventional means. Examples of tea leaves used for extraction include those manufactured from tea leaves taken from the plants of the genus *Camellia (e.g.,* the varieties *C. sinensis* and C. *assamica),* the cultivar *Yabukita,* or their hybrids. Among those manufactured tea leaves, so-called green tea leaves such as *Sencha* (brewed green tea leaves) are particularly preferred. Examples of tea extract concentrates include products whose non-polymeric catechins concentration is increased by removing part or all of water from a liquid tea extract, optionally followed by purification. Tea extract concentrates can be in various forms, such as solid, solution, and slurry. Examples of commercially available tea extract products include, but are not limited to: Green Tea Extract Powder (produced by Matsuura Yakugyo Co., Ltd.); Sunfood™ Series, including Sunfood™ Powder, Sunfood™ 100, Sunfood™ CD, Sunfood™ Aqueous, and Sunfood™ Oily (all produced by Mitsubishi-Chemical Foods Corporation); Green Tea Extract MF (produced by Maruzen Pharmaceuticals Co., Ltd.); Sunphenon® Series, including Sunphenon® 30S-OP, Sunphenon® 30LB-OP, Sunphenon® EGCG-OP, Sunphenon® BG-3, Sunphenon® 90LB-OP, Sunphenon® 90S, Sunphenon® 90MB-OP, Sunphenon® CF-T-OP, and Sunphenon® NB-60 (all produced by Taiyo Kagaku Co., Ltd.); Polyphenon® Series, including Polyphenon G and Polyphenon 70A, and Suncatechin Aqueous F, Suncatechin Oily E, and GTA-MNK-1 (all produced by Mitsui Norin Co., Ltd.); and Green Tea Extract-40, Green Tea Extract-70, and Green Tea Extract (Decaffeinated) (all produced by Tama Biochemical Co., Ltd.).

The content of the tea extract in the beverage of the present invention is not particularly limited and can be in the range of, for example, from 5 to 200 mg/100 mL. The content of the tea extract in the beverage of this invention can also be determined based on the aforementioned amount (concentration) of non-polymeric catechins present in the beverage of this invention. In other words, the amount added of the tea extract can be adjusted so as to ensure that the content of non-polymeric catechins falls within the aforementioned range.

### (Ascorbic acid)

The second characteristic of the beverage of the present invention is that the harsh taste coming from an olive extract is suppressed not only by adding a tea extract and adjusting the content of non-polymeric catechins derived from the tea extract, but also by using ascorbic acid. In the beverage of this invention, suppression of the harsh taste coming from an olive extract is achieved by utilizing the synergetic effect of non-polymeric catechins and ascorbic acid.

The beverage of the present invention contains ascorbic acid at a concentration of from 5 to 80 mg/100 mL, preferably from 10 to 70 mg/100 mL, more preferably from 15 to 60 mg/100 mL. In this invention, a commercially available product of ascorbic acid can be used. Examples of such commercially available ascorbic acid products include Ascorbic Acid (produced by Daiichi Pharmaceutical Co., Ltd.). In the beverage of this invention, salts (metal salts) of ascorbic acid, such as sodium ascorbate and potassium ascorbate, can also be used. Examples of commercially available sodium ascorbate products include Sodium L-Ascorbate (produced by Daiichi Fine Chemical Co., Ltd.).

The content of ascorbic acid and a salt *(e.g.,* metal salt) of ascorbic acid in the beverage can be measured using HPLC as described later in the Examples section. In this analysis method, a salt *(e.g.,* metal salt) of ascorbic acid is detected as ascorbic acid. Therefore, the ascorbic acid content as referred to herein refers to a total content of ascorbic acid and a salt *(e.g.,* metal salt) of ascorbic acid (total ascorbic acid content). It is not preferred that ascorbic acid be present at concentrations exceeding 80 mg/100 mL, since the strong sour taste of ascorbic acid tends to be too prominent. Also, it is not preferred that a metal salt of ascorbic acid be present at concentrations exceeding 80 mg/100 mL, since the salty taste, etc. of the metal salt tends to be too prominent.

In beverages prepared without addition of ascorbic acid (including a salt of ascorbic acid), non-polymeric catechins must be added in large amounts in order to suppress the harsh taste coming from an olive extract, and thereby the preference of the beverage may be deteriorated by the bitterness and heat deterioration odor of the non-polymeric catechins. In contrast, in the beverage of the present invention which is prepared through the combined use of non-polymeric catechins with a specified amount of ascorbic acid, suppression of harsh taste by non-polymeric catechins is synergetically enhanced by ascorbic acid, and therefore, the amount added of the non-polymeric catechins can be reduced.

### (Beverage pH)

Speaking of the harsh taste of packaged beverages containing an olive extract, when a beverage has an acidic pH, *i.e.,* a pH of 4 or less, the harsh taste of an olive extract tends to become less perceivable due to the presence of sourness components. However, when a beverage has a slightly acidic to neutral pH, *i.e.,* a pH of from 4.5 to 7.0, the harsh taste coming from an olive extract is more prominently perceivable since there is almost no sourness component capable of masking harsh taste. Therefore, from the viewpoint of achievement of significant suppression of harsh taste, one of preferred embodiments of the present invention is a packaged beverage having a pH of from 4.5 to 7.0.

The pH of the packaged beverage of the present invention is in the range of preferably from 5.0 to 7.0, more preferably from 5.5 to 6.5, from the viewpoint that the effects of this invention can be significantly exhibited. The pH of the beverage of this invention may be adjusted by controlling the amount added of ascorbic acid or a salt of ascorbic acid, or by using a pH adjustor such as sodium bicarbonate. The pH values as indicated herein are those values measured at 25°C.

As described above, the beverage of the present invention contains specified concentrations of non-polymeric catechins and ascorbic acid. Each of these components is independently strong in its inherent flavor, and may taste unpleasant when consumed alone particularly in the form of a heat sterilized beverage. However, by combining non-polymeric catechins with ascorbic acid, the harsh taste of an olive extract generated by heat sterilization can be effectively suppressed, and also the unpleasant flavors inherent in these components can be mutually masked, so that the beverage can be made easy to drink.

### (Other components)

In addition to the aforementioned components, the beverage of the present invention may have optionally added thereto other various additives such as flavoring, antioxidant, sweetener, acidifier, pigment, emulsifier, preservative, vitamin, essence, and quality stabilizer, to the extent that there is no deviation from the intended object of this invention. From the viewpoint that the effects of this invention can be significantly exhibited, it is preferred not to add a sweetener, an acidifier, or the like to the beverage of this invention.

### (Heat sterilization)

The beverage of the present invention exhibits the intended effects of this invention when made into a heat sterilized packaged beverage. The heat sterilization conditions adopted in this invention can be, for example, those conditions having similar effects to those of the conditions stipulated in the Food Sanitation Act of Japan, and can be specifically set to the following conditions: at 60 to 150°C, preferably at 90 to 150°C, more preferably at 110 to 150°C, for 1 second to 60 minutes, preferably for 1 second to 30 minutes. When the beverage of this invention is produced using a heat-resistant package (*e.g*., metal can, glass bottle), the beverage can be subjected to retort sterilization (at 110 to 140°C for 1 minute to several tens of minutes). When the beverage is produced using a non-heat-resistant package *(e.g.,* PET bottle, paper package), a prepared liquid, for example, can be first sterilized at high temperatures for a short period of time using a plate-type heat exchanger or the like (UHT sterilization at 110 to 150°C for 1 second to several tens of seconds), and then cooled to a specified temperature and packed in the package.

### (Beverage)

The beverage of the present invention is an easy-to-drink beverage characterized in that the harsh taste coming from an olive extract is suppressed. Therefore, from the viewpoint of ease of handling for consumers, the beverage of this invention is advantageous in that it can be provided in a form that is storable at ordinary temperatures for a long period of time and is ready-to-drink (RTD), as a beverage intended for continuous consumption with the expectation that polyphenols present in an olive extract can exhibit their physiological activity.

Since the beverage of the present invention contains a tea extract, one of preferred embodiment of the beverage of this invention is a tea beverage. As referred to herein, the term "tea beverage" refers to a beverage comprising a tea leaf extract or a cereal extract as a primary component, and specific examples thereof include green tea, roasted tea, blended tea, barley tea, mate tea, jasmine tea, black tea, oolong tea, and du zhong tea. The tea beverage particularly preferred in this invention is a green tea beverage.

The beverage of the present invention is a packaged beverage, and can be a packaged beverage obtained through heat sterilization. Like in the case of common beverages, examples of the package used for the packaged beverage of this invention include polyethylene terephthalate-based molded packages (so-called PET bottle), metal cans, paper packages combined with metallic foils or plastic films, and glass bottles. The beverage of this invention can be provided in a commonly used form packed in such a package. The volume of the packaged beverage of this invention is not particularly limited, and is for example in the range of from 350 mL to 2000 mL, preferably from 500 mL to 2000 mL.

### (Production method)

In another aspect, the present invention provides a method for producing a packaged beverage.

More specifically, another aspect of this invention is directed to a method for producing a packaged beverage, the method comprising the steps of:
adjusting the hydroxytyrosol content in the beverage to be in the range of from 0.8 to 6 mg/100 mL;
adding a tea extract so as to ensure that the non-polymeric catechins content in the beverage is in the range of from 1 to 100 mg/100 mL;
adding 5 to 80 mg/100 mL of ascorbic acid to the beverage;
heat sterilizing the beverage; and
packing the beverage in a package.

In the production method of the present invention, adjustment of the hydroxytyrosol content in the beverage may be made by the addition of an olive extract. In other words, the production method of this invention can involve the step of adding an olive extract so as to ensure that the hydroxytyrosol content in the beverage is in the range of from 0.8 to 6 mg/100 mL. In addition to the steps of adding an olive extract, a tea extract and ascorbic acid, the production method of this invention can also contain the steps of adding other various components and materials as mentioned above and adjusting the contents of such other components and materials. Various factors, including the types and contents of such other components to be added to the beverage, are as described above in relation to the beverage of this invention or are obvious from the descriptions given above regarding the inventive beverage. In the production method of this invention, the procedures for adding different components are not limited. For example, different components can be added to the beverage by using a known procedure. The steps of adding different components may be performed simultaneously or separately, or may be performed in random order. Also, the heat sterilization and packaging steps in the production method of this invention are as described above in relation to the beverage of this invention or are obvious from the descriptions given above regarding the inventive beverage.

The production method of the present invention may further comprise the step of adjusting the pH of the beverage to be in the range of from 4.5 to 7.0. As mentioned above, when a beverage has a slightly acidic to neutral pH, the harsh taste coming from an olive extract is more prominently perceivable. Therefore, it is preferable to adjust the pH of the beverage to be in the range of from 4.5 to 7.0. A more preferred range of pH to be adjusted is as described above in relation to the beverage of this invention.

### EXAMPLES

Hereunder, the present invention will be specifically described in detail by way of working examples, but this invention is not limited to these examples. Unless otherwise stated herein, all numerical ranges are inclusive of their endpoints.

In the working examples given below, the contents of different components in beverages were analyzed according to the procedures detailed below.

### <Measurement of hydroxytyrosol>

Beverage samples were filtered through a filter (0.45 µm), analyzed by LC/MS/MS, and quantified using the internal standard method.
o HPLC conditions
   - Internal standard (I.S.): 3-(4-Hydroxyphenyl)-1-propanol
   - Column: CAPCELL PAK, AQ, C18 (3.0 µm, 2.0 × 100 mm; produced by Shiseido Co., Ltd.)
   - Mobile phases: Phase A: aqueous solution of 0.1% acetic acid; Phase B: aqueous solution of 0.1% acetic acid/90% acetonitrile
   - Flow rate: 0.25 mL/min.
   - Gradient program:
      5 → 30% Solution B (0-10 min.)
      30 → 85% Solution B (10-11 min.)
      85% Solution B (11-15 min.)
      85 → 5% Solution B (15-15.1 min.)
      5% Solution B (15.1-20 min.)
o MS conditions
   - Ionization mode: ESI
   - IS: -4500 V
   - TEM: 600°C
   - GS1: 60 psi
   - GS2: 80 psi
   - CUR: 50 psi
   - CAD: 7
   - Detection mode: Negative ion MRM

### <Measurement of non-polymeric catechins>

Beverage samples were filtered through a filter (0.45 µm) and analyzed by HPLC. The HPLC analysis conditions used were as follows.
- HPLC system: Tosoh HPLC system LC8020 model II
- Column: TSKgel ODS80T sQA (4.6 mm × 150 mm)
- Column temperature: 40°C
- Mobile phase A: Water/acetonitrile/trifluoroacetic acid (90:10:0.05)
- Mobile phase B: Water/acetonitrile/trifluoroacetic acid (20:80:0.05)
- Detection: UV 275 nm
- Injection volume: 20 µL
- Flow rate: 1 mL/min.
- Gradient program:

| Time (min.) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

- Reference standards: Catechin, epicatechin, gallocatechin, epigallocatechin, catechin gallate, epicatechin gallate, gallocatechin gallate and epigallocatechin gallate (Kurita highpurity reagents)

### <Measurement of total ascorbic acid content>

One to five grams of a sample was diluted to an appropriate concentration with an aqueous solution of 5% metaphosphoric acid (50 mL). After centrifugation, filtration was done to obtain 1 mL of a filtrate in a small test tube. Further, 1 mL of an aqueous solution of 5% metaphosphoric acid was added, followed by addition of 100 µL of a 0.2% dichlorophenolindophenol solution and 2 mL of a solution of 2% thiourea/5% metaphosphoric acid. Next, 0.5 mL of 2% 2,4-dinitrophenylhydrazine/4.5 mol/L sulfuric acid was added, and the mixture was reacted at 38 to 42°C for 16 hours. Then, the reaction mixture was extracted with 3 mL of ethyl acetate (by shaking for 60 minutes), dried over anhydrous sodium sulfate, and analyzed by HPLC.

The HPLC system used was LC-10AS (Shimadzu Corporation), the UV-VIS detector used was SPD-10AV (Shimadzu Corporation), and the column used was Senshupak Silca-1100, 4.6 mm × 100 mm long (column temperature: 35°C). The mobile phase used was a mixed solution of ethyl acetate, hexane, acetic acid and water (60:40:5:0.05). The flow rate was set to 1.5 mL/min, and the detection wavelength was set to 495 nm.

### Example 1: Evaluation of the harsh taste of olive extract-containing packaged beverages (1)

The olive extract used was an olive leaf extract (product name: Oraris; containing 20% hydroxytyrosol; produced by Eisai Food & Chemical Co., Ltd.). The olive extract and water were mixed together to obtain different beverages having different hydroxytyrosol contents as shown in Table 1. 180 mL each of the beverages was packed in a 200 mL PET bottle, sealed with a lid, and then heat sterilized in a hot water bath at 85°C while the temperature was maintained at 85°C for 10 minutes, whereby different packaged beverages were prepared. Then, the beverages were cooled to room temperature (20°C) and evaluated for harsh taste (an unpleasant taste which is felt when swallowing a beverage and which deteriorates clean sensation and quick aftertaste) by three panelists.

The evaluation results are shown in Table 1. The sensory ratings shown in the table refer to the numbers of panelists who felt harsh taste. All the panelists evaluated that the beverages containing hydroxytyrosol at concentrations of 0.8 mg/100 mL or higher were felt to be uncomfortable and left a harsh taste after the beverages were swallowed.

**[Table 1]**

| | Sample | | | | | |
|---|---|---|---|---|---|---|
| | 1-1 | 1-2 | 1-3 | 1-4 | 1-5 | 1-6 |
| Hydroxytyrosol content (mg/100 mL) | 0.3 | 0.5 | 0.8 | 1.0 | 1.8 | 5.0 |
| pH (25°C) | 4.5 | 4.5 | 4.4 | 4.4 | 4.4 | 4.4 |
| Sensory rating (number of panelists) | 0 | 1 | 3 | 3 | 3 | 3 |

### Example 2: Evaluation of the harsh taste of olive extract-containing packaged beverages (2)

Different packaged beverages (samples 2-1 and 2-2) were prepared by the same procedure as that for sample 1-3 prepared in Example 1, except that the pH values of the heat sterilized beverages were adjusted to 5.9 or 6.4 with sodium bicarbonate. Samples 2-1 and 2-2 and sample 1-3 were evaluated for the intensity of harsh taste perceived after swallowing the beverages. All the panelists evaluated that the beverages with higher pH values (samples 2-1 and 2-2) were stronger in harsh taste than sample 1-3 having a pH of 4.4.

### Example 3: Harsh taste suppression effect of non-polymeric catechins

A tea extract was added to sample 1-3 or 1-6 prepared in Example 1 to obtain different beverages having different non-polymeric catechins contents as shown in Table 2. Further, sodium bicarbonate was added to heat sterilized beverages to give a pH of 5.9. Except for the addition of non-polymeric catechins and sodium bicarbonate, the different olive extract-containing packaged beverages were prepared by the same procedure as in Example 1. The tea extract used was a crudely purified green tea extract (product name: Sunphenon 90LB-OP; containing 70% non-polymeric catechins; produced by Taiyo Kagaku Co., Ltd.). The prepared beverages were subjected to sensory evaluation regarding harsh taste by three panelists. In the sensory evaluation, a beverage prepared without addition of a tea extract was used as a control, and the beverage samples were rated on a 5-point scale (5 points: no harsh taste is felt; 4 points: only a slight harsh taste is felt; 3 points: a somewhat harsh taste is felt (the harsh taste is not so strong as to deteriorate beverage preference); 2 points: a harsh taste is felt (the harsh taste is strong enough to deteriorate beverage preference); 1 point: a strong harsh taste is felt (the harsh taste is as strong as that of the control)). The sensory ratings were first given by each panelist on his/her own, and then finally determined through discussion among all the panelists.

The results are shown in Table 2. It was suggested that addition of non-polymeric catechins at concentrations of 1 mg/100 mL or higher results in suppression of harsh taste. However, since there were cases where a tea extract containing non-polymeric catechins developed heat deterioration odor on its own, attempts to add a tea extract in large amounts did not result in adequate suppression of the harsh taste of an olive extract.

**[Table 2]**

| | Sample | | | | | |
|---|---|---|---|---|---|---|
| | 3-1 | 3-2 | 3-3 | 3-4 | 3-5 | 3-6 |
| Hydroxytyrosol content (mg/100 mL) | 0.8 | | | | | |
| Non-polymeric catechin content m/100 mL) | 0 | 0.1 | 1 | 20 | 50 | 100 |
| Sensory rating (point) | 1 | 1 | 2 | 2 | 2 | 2 |
| | | | | | | |

| | Sample | | | | | |
|---|---|---|---|---|---|---|
| | 3-7 | 3-8 | 3-9 | 3-10 | | |
| Hydroxytyrosol content (mg/100 mL) | 5.0 | | | | | |
| Non-polymeric catechin content (mg/100 mL) | 0 | 0.1 | 1 | 100 | | |
| Sensory rating (point) | 1 | 1 | 2 | 2 | | |

### Example 4: Harsh taste suppression effect of ascorbic acid

Different packaged beverages were prepared and evaluated by the same procedure as in Example 3, except that the tea extract used in Example 3 was replaced with ascorbic acid. As the ascorbic acid to be added in this example, ascorbic acid and sodium ascorbate were used -- these were added so as to ensure that the heat sterilized beverages had a pH of 5.9.

The results are shown in Table 3. The harsh taste of an olive extract was not suppressed by addition of ascorbic acid.

**[Table 3]**

| | Sample | | | | |
|---|---|---|---|---|---|
| | 4-1 | 4-2 | 4-3 | 4-4 | 4-5 |
| Hydroxytyrosol content (mg/100 mL) | 0.8 | | | | |
| Non-polymeric catechin content (mg/100 mL) | 0 | | | | |
| Ascorbic acid content (mg/100 mL) | 0 | 10 | 20 | 50 | 80 |
| Sensory rating (point) | 1 | 1 | 1 | 1 | 1 |
| | | | | | |

| | Sample | | | | |
|---|---|---|---|---|---|
| | 4-6 | 4-7 | 4-8 | 4-9 | 4-10 |
| Hydroxytyrosol content (mg/100 mL) | 5.0 | | | | |
| Non-polymeric catechin content (mg/100 mL) | 0 | | | | |
| Ascorbic acid content (mg/100 mL) | 0 | 10 | 20 | 50 | 80 |
| Sensory rating (point) | 1 | 1 | 1 | 1 | 1 |

### Example 5: Harsh taste suppression effect of non-polymeric catechins and ascorbic acid (1)

Different packaged beverages were prepared and evaluated by the same procedure as in Example 3, except that a tea extract (of the same type as used in Example 3), sodium bicarbonate and ascorbic acid were added to sample 1-3, 1-5 or 1-6 prepared in Example 1 to obtain different beverages having different non-polymeric catechins and ascorbic acid contents as shown in Tables 4 to 6. The pH values of the different heat sterilized beverages are as shown in Tables 4 to 6.

The evaluation results are shown in Tables 4 to 6. The harsh taste of an olive extract was significantly improved by combined use of non-polymeric catechins and ascorbic acid. When non-polymeric catechins were contained at concentrations exceeding 100 mg/mL, the off-flavor coming from a tea extract was perceived as a harsh taste. In view of this, it was suggested that the upper limit of the non-polymeric catechins content is 100 mg/mL. Also, when ascorbic acid was contained at concentrations exceeding 80 mg/100 mL, the uncomfortable taste of ascorbic acid generated by heating was perceived as a harsh taste. In view of this, it was suggested that the upper limit of the ascorbic acid content is 80 mg/100 mL.

**[Table 4]**

| | Sample | | | | | | |
|---|---|---|---|---|---|---|---|
| | 5-1 | 5-2 | 5-3 | 5-4 | 5-5 | 5-6 | 5-7 |
| Hydroxytyrosol content (mg/100 mL) | 0.8 | | | | | | |
| Non-polymeric catechin content (mg/100 mL) | 0 | 1 | | | 20 | | |
| Ascorbic acid content (mg/100 mL) | 0 | 5 | 35 | 80 | 5 | 35 | 80 |
| pH (25°C) | 4.5 | 5.9 | 6.0 | 6.4 | 5.3 | 5.7 | 6.1 |
| Sensory rating (point) | 1 | 4 | 4 | 4 | 4 | 5 | 5 |
| | | | | | | | |

| | Sample | | | | | | |
|---|---|---|---|---|---|---|---|
| | 5-8 | 5-9 | 5-10 | 5-11 | 5-12 | | |
| Hydroxytyrosol content (mg/100 mL) | 0.8 | | | | | | |
| Non-polymeric catechin content (mg/100 mL) | 50 | | | 100 | | | |
| Ascorbic acid content m/100 mL) | 5 | 35 | 80 | 5 | 35 | | |
| pH (25°C) | 5.0 | 5.5 | 5.8 | 5.0 | 5.4 | | |
| Sensory rating (point) | 5 | 5 | 5 | 5 | 5 | | |

**[Table 5]**

| | Sample | | |
|---|---|---|---|
| | 6-1 | 6-2 | 6-3 |
| Hydroxytyrosol content (mg/100 mL) | 1.8 | | |
| Non-polymeric catechin content (mg/100 mL) | 0 | 50 | |
| Ascorbic acid content (mg/100 mL) | 0 | 5 | 35 |
| pH (25°C) | 4.4 | 5.0 | 5.5 |
| Sensory rating (point) | 1 | 5 | 5 |

**[Table 6]**

| | Sample | | | | | | |
|---|---|---|---|---|---|---|---|
| | 7-1 | 7-2 | 7-3 | 7-4 | 7-5 | 7-6 | 7-7 |
| Hydroxytyrosol content (mg/100 mL) | 5.0 | | | | | | |
| Non-polymeric catechin content (mg/100 mL) | 0 | 1 | | | 20 | | |
| Ascorbic acid content (mg/100 mL) | 0 | 5 | 35 | 80 | 5 | 35 | 80 |
| pH (25°C) | 4.4 | 5.1 | 5.6 | 5.9 | 5.0 | 5.4 | 5.7 |
| Sensory rating (point) | 1 | 4 | 4 | 4 | 4 | 5 | 5 |
| | | | | | | | |

| | Sample | | | | | | |
|---|---|---|---|---|---|---|---|
| | 7-8 | 7-9 | 7-10 | 7-11 | | | |
| Hydroxytyrosol content (mg/100 mL) | 5.0 | | | | | | |
| Non-polymeric catechin content m/100 mL) | 50 | | 100 | 180 | | | |
| Ascorbic acid content (mg/100 mL) | 80 | 120 | 35 | | | | |
| pH (25°C) | 5.5 | 6.2 | 5.3 | 5.1 | | | |
| Sensory rating (point) | 5 | 1 | 5 | 1 | | | |

### Example 6: Harsh taste suppression effect of non-polymeric catechins and ascorbic acid (2)

Ten grams of green tea leaves *(Sencha* made from the cultivar *Yabukita)* were extracted with 350 mL of pure water at 80°C for 10 minutes and filtrated to obtain a liquid tea extract containing non-polymeric catechins at a concentration of 180 mg/100 mg. To the tea extract, pure water was added to obtain different beverages having different non-polymeric catechins contents as shown in Table 7. Further, an olive extract (product name: Oraris; containing 20% hydroxytyrosol; produced by Eisai Food & Chemical Co., Ltd.) and L-ascorbic acid were added to give different hydroxytyrosol and ascorbic acid contents as shown in Table 7. The pH of the beverages was adjusted to pH 6.4 by addition of a pH adjustor (sodium bicarbonate). 180 mL each of the beverages was packed in a 200 mL PET bottle, sealed with a lid, and then heat sterilized in a hot water bath at 85°C while the temperature was maintained at 85°C for 10 minutes, whereby different packaged beverages were prepared. Then, the beverages were cooled to room temperature (20°C) and evaluated for the intensity of harsh taste by three panelists on a 5-point scale (5 points: no harsh taste is felt; 4 points: only a slight harsh taste is felt; 3 points: a somewhat harsh taste is felt (the harsh taste is not so strong as to deteriorate beverage preference); 2 points: a harsh taste is felt (the harsh taste is strong enough to deteriorate beverage preference); 1 point: a strong harsh taste is felt). The sensory ratings were first given by each panelist on his/her own, and then finally determined through discussion among all the panelists.

The results are shown in Table 7. It was confirmed that also when a liquid tea extract is used in combination with ascorbic acid, the harsh taste of an olive extract can be synergetically suppressed.

**[Table 7]**

| | Sample | | | | | | |
|---|---|---|---|---|---|---|---|
| | 8-1 | 8-2 | 8-3 | 8-4 | 8-5 | 8-6 | 8-7 |
| Hydroxytyrosol content (m/100 mL) | 0.8 | | | | | | |
| Non-polymeric catechin content (mg/100 mL) | 0.1 | 1 | | | | 20 | |
| Ascorbic acid content mg/100 mL) | 80 | 0 | 5 | 35 | 80 | 0 | 35 |
| Sensory rating (point) | 1 | 2 | 4 | 4 | 4 | 2 | 5 |
| | | | | | | | |

| | Sample | | | | | | |
|---|---|---|---|---|---|---|---|
| | 8-8 | 8-9 | 8-10 | 8-11 | | | |
| Hydroxytyrosol content (mg/100 mL) | 0.8 | | | | | | |
| Non-polymeric catechin content (mg/100 mL) | 50 | | | | | | |
| Ascorbic acid content (mg/100 mL) | 0 | 5 | 35 | 80 | | | |
| Sensory rating (point) | 2 | 5 | 5 | 5 | | | |
| | | | | | | | |

| | Sample | | | | | | |
|---|---|---|---|---|---|---|---|
| | 8-12 | 8-13 | 8-14 | 8-15 | 8-16 | 8-17 | |
| Hydroxytyrosol content (mg/100 mL) | 5.0 | | | | | | |
| Non-polymeric catechin content (mg/100 mL) | 0.1 | 1 | | | | 20 | |
| Ascorbic acid content (mg/100 mL) | 80 | 0 | 5 | 35 | 80 | 35 | |
| Sensory rating (point) | 1 | 2 | 4 | 4 | 4 | 5 | |
| | | | | | | | |

| | Sample | | | | | | |
|---|---|---|---|---|---|---|---|
| | 8-18 | 8-19 | 8-20 | 8-21 | 8-22 | | |
| Hydroxytyrosol content (mg/100 mL) | 5.0 | | | | | | |
| Non-polymeric catechin content (mg/100 mL) | 50 | | | 100 | 180 | | |
| Ascorbic acid content (mg/100 mL) | 5 | 35 | 80 | 5 | 35 | | |
| Sensory rating (point) | 5 | 5 | 5 | 5 | 1 | | |

## Claims

1. A packaged beverage comprising a tea extract, wherein the beverage satisfies the following requirements (i) to (iii):
(i) a hydroxytyrosol content of from 0.8 to 6 mg/100 mL;
(ii) a non-polymeric catechins content of from 1 to 100 mg/100 mL; and
(iii) an ascorbic acid content of from 5 to 80 mg/100 mL.

2. The beverage according to claim 1, wherein the beverage contains an olive extract.

3. The beverage according to claim 1 or 2, wherein the beverage has a pH of from 4.5 to 7.0.
